(19) Europäisches Patentamt
European Patent Office
Office européen des brevets

(11) **EP 3 073 432 A1**

(12) **EUROPEAN PATENT APPLICATION**

(43) Date of publication:
**28.09.2016  Bulletin 2016/39**

(51) Int Cl.:
*G06Q 40/00* (2012.01)     *G06Q 40/08* (2012.01)

(21) Application number: **16150834.6**

(22) Date of filing: **12.01.2016**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(30) Priority: **26.03.2015   US 201514670392**

(71) Applicant: **STOXX Ltd.**
**8021 Zürich (CH)**

(72) Inventor: **Plagge, Jan-Carl**
**New York, NY 10038 (US)**

(74) Representative: **Grünecker Patent- und**
**Rechtsanwälte**
**PartG mbB**
**Leopoldstraße 4**
**80802 München (DE)**

(54) **COUNTRY SPECIFIC REVENUE ESTIMATION**

(57)     A computer system, method and tangible storage medium are provided to estimate a company's revenue pertaining to a given country within a specific geographic region. Region-specific revenue data is received that indicates the company's revenue pertaining to the geographic region. The company's home country is determined and country-specific export data is received that indicates a macroeconomic export volume or export value from the company's home country to the given country within the geographic region. Country-specific revenue data is calculated estimating the company's revenue pertaining to the given country within the geographic region based on the region-specific revenue data and the country-specific export data.

Proxy System 100

FIG. 1

EP 3 073 432 A1

**Description**

**BACKGROUND OF THE INVENTION**

**1. Field of the Invention**

The invention relates to computer systems, computer-implemented methods and tangible computer-readable storage media configured to calculate revenues of companies.

**2. Description of the Related Art**

An important quantity in evaluating a company's economic power is its revenue (also referred to as turnover or top line). In general, revenue is the income that a company receives from its normal business activities, *i.e.,* from the sale of goods and services to customers, from interest, royalties or other fees, from financial investments such as stock shares in other companies, or from other sources. Evaluating a company's revenue is a crucial part of financial statement analysis.

In their financial statements, companies typically report their revenues as total revenues or as revenues on the level of a geographic region or country. For instance, some companies report nothing but their global total revenue while other companies break down their revenues to regions like Asia or Europe. Yet other companies report all or part of their revenues on a per country level.

The diverse levels of granularity in this revenue data make it extremely difficult to efficiently perform evaluations. For instance, the heterogeneity of this data poses a significant burden on any attempt to analyze performance figures of different companies. It is also difficult to evaluate how certain events occurring on a country level may influence a company's value if this company reports its revenue on a coarser level such as for a geographic region or even as total revenue.

**SUMMARY OF THE INVENTION**

A technique is provided that allows for decomposing revenues of companies in a manner that overcomes the above described disadvantages, e.g., by breaking down regional revenues to a per country level. In doing so, data such as country-specific export data is used in a new way to create novel data.

In an embodiment, a computer system is provided that comprises one or more processors configured to receive region-specific revenue data indicating a company's revenue pertaining to a specific geographic region, determine the company's home country, receive country-specific export data indicating a macroeconomic export volume or export value from the company's home country to a given country within the geographic region, and calculate country-specific revenue data estimating the company's revenue pertaining to the given country within the geographic region based on the region-specific revenue data and the country-specific export data.

The computer system may also determine whether the company's home country is within the geographic region, and calculating the country-specific revenue data may comprise applying a first algorithm if the company's home country is within the geographic region, and a second algorithm if the company's home country is not within the geographic region. The first algorithm may be different from the second algorithm.

When applying the first algorithm, home country revenue data may be calculated to estimate the company's revenue pertaining to its home country. The estimated company's revenue pertaining to its home country may then be subtracted from the company's revenue pertaining to the specific geographic region as indicated by the region-specific revenue data, thereby resulting in an estimated company's revenue pertaining to the specific geographic region excluding the company's home country. The second algorithm may then be applied using the estimated company's revenue pertaining to the specific geographic region excluding the company's home country.

The home country revenue data may be calculated based on one or more of: a gross domestic product of the company's home country, an export volume or export value from the company's home country to the rest of the world, and an import volume or import value from the rest of the world to the company's home country. Alternatively, or additionally, the home country revenue data may be calculated based on other companies' revenue shares pertaining to the company's home country.

The computer system may further determine whether the geographic region is the entire world. Determining that the geographic region is the entire world may comprise inferring that the company's home country is within the geographic region.

In another embodiment, there is provided a computer system that comprises one or more processors configured to receive region-specific revenue data indicating a company's revenue pertaining to a specific geographic region, determine the company's home country and an industry to which the company belongs, receive country-specific and industry-specific export data indicating a macroeconomic export volume or export value within the determined industry from the company's home country to a given country within the geographic region, and calculate country-specific revenue data estimating the company's revenue pertaining to the given country within the geographic region based on the region-specific revenue data and the country-specific and industry-specific export data.

The computer system may determine whether the company's home country is within the geographic region. Calculating the country-specific revenue data may comprise applying a first algorithm if the company's home country is within the geographic region, and a second algorithm if the company's home country is not within the geographic region, the first algorithm being different from the second algorithm.

When applying the first algorithm, industry-dependent home country revenue data may be calculated to estimate the company's revenue pertaining to its industry and home country. The estimated company's revenue pertaining to its industry and home country may be subtracted from the company's revenue pertaining to the specific geographic region as indicated by the region-specific revenue data, thereby resulting in an estimated company's revenue pertaining to the specific geographic region excluding the company's home country. The second algorithm may then be applied using the estimated company's revenue pertaining to the specific geographic region excluding the company's home country.

The industry-dependent home country revenue data may be calculated based on other companies' revenue shares pertaining to the company's home country and industry. Alternatively, or additionally, the industry-dependent home country revenue data may be calculated based on one or more of a gross domestic product of the company's industry within the home country, an export volume or export value from the company's industry within the home country to the rest of the world, and an import volume or import value from the rest of the world to the company's industry within its home country.

The computer system may determine whether the geographic region is the entire world, and determining that the geographic region is the entire world may comprise inferring that the company's home country is within the geographic region.

In any of the above embodiments or in any other embodiment, an economic index may be calculated to track changes in one or more of the company's economic performance and the company's home country's economic performance based on the calculated country-specific revenue data and/or revenues already directly reported by the company on country level.

In any of the above embodiments or in any other embodiment, company-specific country risk data may be calculated to estimate the company's risk pertaining to the given country within the geographic region based on the calculated country-specific revenue data and based on a company-independent risk score pertaining to the country.

The company-specific country risk data may be calculated by determining a weighted average of the calculated country-specific revenue data and the company-independent risk score.

In an embodiment, an economic index may be calculated to track changes in one or more of the company's economic performance and the company's home country's economic performance based on the calculated country-specific revenue data and the calculated company-specific country risk data and/or based on revenues already directly reported by the company on country level.

In any of the above embodiments or in any other embodiment, the acts of receiving the region-specific revenue data, determining the company's home country, receiving the country-specific export data, and calculating the country-specific revenue data, and optionally any other act of the embodiments, may be performed as part of a proxy that provides revenue breakdowns on a country level even where such revenues are not available.

In further embodiments, a corresponding computer-implemented method and a corresponding tangible computer-readable storage medium are provided.

## BRIEF DESCRIPTION OF THE DRAWINGS

The accompanying drawings are incorporated into and form a part of the specification for the purpose of explaining the principles of the invention. The drawings are not to be construed as limiting the invention to only the illustrated and described examples of how the invention can be made and used. Further features and advantages will become apparent from the following and more particular description of the invention, as illustrated in the accompanying drawings, wherein:

FIG. 1 illustrates a computer system according to an embodiment;

FIG.2 is a flow chart illustrating a process of calculating country-specific revenue data in accordance with an embodiment; and

FIG. 3 is a flow chart illustrating another process of calculating country-specific revenue data in accordance with an embodiment.

**DETAILED DESCRIPTION OF THE INVENTION**

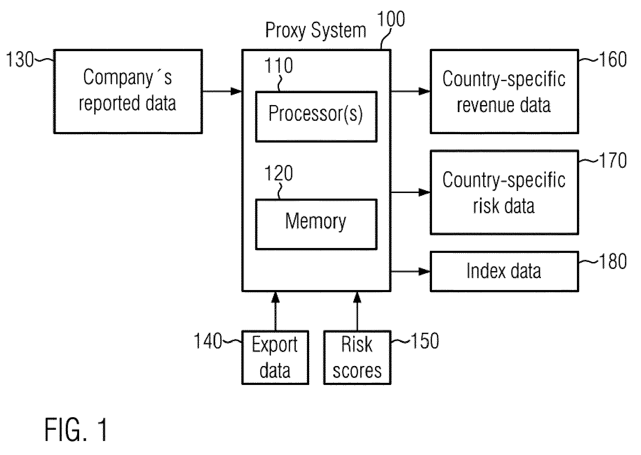

The illustrative embodiments of the present invention will be described with reference to the figure drawings. Referring first to FIG. 1, a computer system 100 is depicted that may be used in an embodiment. The computer system 100 shown in FIG. 1 is stated to be a proxy but other embodiments may exist where the computer system is of a different type. When acting as proxy, the computer system 100 is configured to receive requests from one or more clients for country-specific revenue data and respond to these requests by calculating this data and sending it back. Irrespective of whether the computer system 100 acts as proxy, it calculates country-specific revenue data using other data and may be regarded as an estimator of revenue breakdowns. This other data may include data regarding macroeconomic trade relations among countries and/or industries.

The computer system 100 includes one or more processors 110 and a memory 120. The memory 120 may store instructions for the one or more processors 110 to execute, and the memory 120 may further store data 130, 140, 150 received from various sources, intermediate data generated while performing the calculations, and/or output data 160, 170, 180.

As will be described in more detail below, the input data may include a company's reported revenue data 130, country-specific export data 140 and/or risk scores 150. Country-specific export data 140 may be taken from various sources such as the United Nations Comtrade and Service Trade Database or the World Bank database. The output data may include country-specific revenue data 160, country-specific risk data 170 and/or index data 180. All calculations described below are subject to ongoing data updates, *i.e.,* all input factors are updated in a recurring, e.g., quarterly or annual, basis. For the sake of lucidity, the time parameter has been dropped.

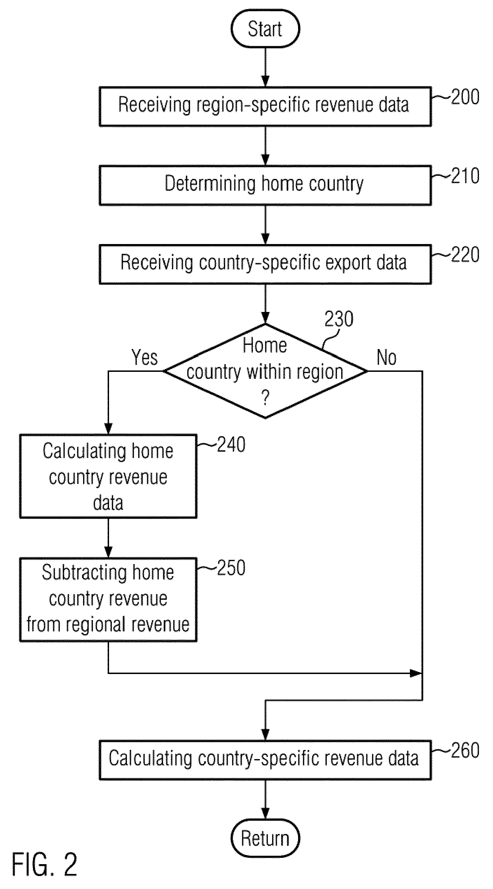

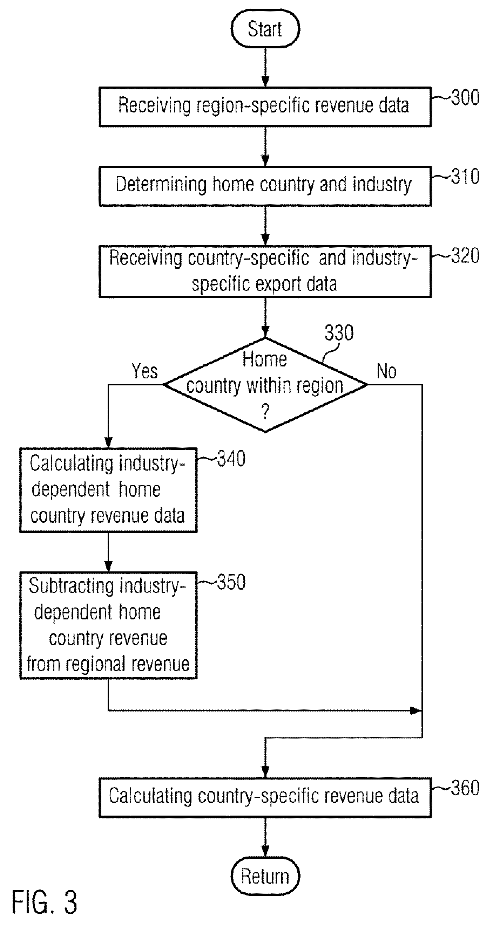

The calculation of country-specific revenue data 160 may be done based on a country-dependent perspective, with the country perspective depending on the reporting company's home country. An embodiment of such an approach will be described further below with reference to FIG. 2. Another embodiment additionally takes into account an industry-dependent perspective, with the industry perspective depending on the reporting company's industry. This will be described with reference to FIG. 3.

Turning first to FIG. 2, *i.e.,* to the approach which is based on a country-dependent perspective, the process starts with step 200 where region-specific revenue data 130 of a company is received. This region-specific revenue data 130 includes one or more absolute or relative revenues of the respective country in a given geographic region. For instance, the region-specific revenue data 130 may indicate that company Example Corp. had generated a revenue in Europe in the amount of 2.5 Billion US$, or company Sample Inc. had generated 72% of its total revenue in Asia.

The process continues by determining the company's home country in step 210. It is noted that this step is depicted in FIG. 2 to occur after step 200 and before step 220, but may be performed at other times as well, *e.g.,* simultaneously with such steps or before step 200 or after step 220. Determining the company's home country may be performed by extracting respective information from any input data or by using suitable data stored in memory 120.

In step 220, country-specific export data 140 is received that includes data with respect to the company's home country and the geographic region the reported revenue data relates to. This may be done instantaneously when such information is required, or it may take place at any other time. While FIG. 1 shows such data to be received from a source which is external to the computer system 100, it is noted that embodiments exist where this data is loaded into memory 120 in advance, and when the process of FIG. 2 is performed, this pre-loaded data is received from memory 120.

Country-specific export data 140 may indicate in relative or absolute terms the export volume or export value from the company's home country to any or all countries within the geographic region reported in step 200 on a per country level. For instance, the country-specific export data 140 may indicate exports of goods and services in monetary terms.

Once all the necessary data has been collected, the process continues with step 230 where it is determined whether the company's home country is within the geographic region. While step 230 is depicted in FIG. 2 to be performed as extra step, it is noted that in other embodiments, a determination of whether the company's home country is within the geographic region may be made on an implicit basis or may even not be necessary at all.

If the reported region does not include the reporting company's home country, then the process proceeds to step 260 where country-specific revenue data 160 is calculated. If $i$ denotes the company and $H$ denotes this company's home country, then the revenues $S_{i,c_R}$ generated by company $i$ located in country $H$ that are generated in country $c_R$ of region $R$ may be calculated as follows:

$$S_{i,c_R} = \frac{EXP_{H,c_R}}{\sum_{c_R}^{C} EXP_{H,c_R}} S_{i,R}$$

where $S_{i,R}$ indicates the revenues of company $i$ generated in region $R$. $EXP_{H,c_R}$ indicates the exports from country $H$ to country $c_R$ of region $R$. $\sum_{c_R}^{C} EXP_{H,c_R}$ indicates the sum of exports from country $H$ to all countries $c$ in region $R$.

In case the reported region does include the reporting company's home country, the portion of revenues that is assumed to be generated in company $i$'s home country $H$ may first be extracted in step 240 and then subtracted in step 250 from the revenues of company $i$ generated in region $R$. The process may then proceed to step 260 to perform the calculation as described above.

In an embodiment, step 240 may include separating the home country portion $S_{i,H}$ from regional revenues $S_{i,R}$. The home country portion $S_{i,H}$ may be calculated as follows:

$$S_{i,H} = \left(1 - \frac{\sum_{c_R}^{C} EXP_{H,c_R}}{\sum_{c_R}^{C} EXP_{H,c_R} + GDP_H - EXP_{H,V} + IMP_{H,V}}\right) S_{i,R}$$

where $GDP_H$ indicates the gross domestic product of company $i$'s home country $H$, $EXP_{H,V}$ indicated the exports from the home country $H$ of company $i$ to the rest of the world $V$, and $IMP_{H,V}$ indicated the imports from the rest of the world $V$ to company $i$'s home country $H$.

In an alternative embodiment of step 240, the portion of revenues generated locally can also be determined as the average share of local revenues determined across all those companies $\tilde{\imath} = 1, ..., N_H$ from country $H$ in the data sample that directly report their local revenues:

$$S_{i,H} = \left(1/N_H \sum_{\tilde{\imath}}^{N_H} \frac{S_{\tilde{\imath},H}}{TR_{\tilde{\imath},H}}\right) TR_{i,H}.$$

Irrespective of how the home country portion $S_{i,H}$ is being calculated, the portion of revenues $S_{i,K}$ generated in the reported home region $K$ outside of reporting company $i$'s home country $H$ may then be calculated in step 250:

$$S_{i,K} = S_{i,R} - S_{i,H}.$$

Finally, the remaining country revenues may be determined as follows:

$$S_{i,c_R} = \frac{EXP_{H,c_R}}{\sum_{c_R}^{C} EXP_{H,c_R}} S_{i,K}.$$

Referring again to FIG. 2, the process may include determining whether the geographic region reported by the company is the entire world. This may be done in a separate process step or together with one of steps 200, 210, 220 or 230. In an embodiment, when it has been determined that the company had reported its revenue for the entire world, then step 230 is skipped and the process continues with step 240 as if it was determined that the company's home country is within the geographic region.

In this case, *i.e.,* where a company only reports a single revenue number for the entire world $W$, without any further breakdown to a country or lower regional level, a methodology similar to that explained above may be applied to break down revenues to a per country level.

In step 240, the home portion of total reported revenues may be determined by separating the home country portion:

$$S_{i,H} = \left(1 - \frac{EXP_{H,V}}{GDP_H + IMP_{H,V}}\right) S_{i,W}$$

where $S_{i,W}$ indicates revenues of company $i$ generated in the world $W$.

Again, the portion of revenues generated locally may alternatively be determined as the average share of local revenues determined across all those companies $N_H$ from country $H$ in the data sample that directly report their local revenues, as was described above.

The portion of revenues generated in the "rest of the world" $V$ may be calculated in step 250 as

$$S_{i,V} = S_{i,W} - S_{i,H} \; .$$

Finally, the remaining country revenues may be determined as follows:

$$S_{i,c_V} = \frac{EXP_{H,c_V}}{\sum_{c_V}^{C} EXP_{H,c_V}} S_{i,V}$$

where $EXP_{H,c_V}$ indicates the exports from the home country $H$ of company $i$ to country $c$ in the rest of the world $V$.

While the process of breaking down revenues to a per country level has been described so far from a country dependent perspective with reference to FIG. 2, another embodiment will now be described with reference to FIG. 3 to demonstrate how the previous embodiments can be extended to achieve a country and industry dependent perspective. In this perspective, the process of determining country breakdowns not only takes into account the reporting company's home country but additionally considers the industry to which the reporting company belongs. The process may, similar to the one described above, be based on macroeconomic exports of goods (commodities) and services. However, exports are now analyzed from a country-industry perspective rather than merely from a country perspective. In order to connect the company with the country level, each company is assigned to an industry. Exports of commodities and services, available on country level, are then mapped into industries depending on the similarity and relevance of each commodity and service for the respective industry. Hereby, more than one commodity/service can be mapped into a specific industry; on the other hand, more than one industry can be mapped to one specific commodity/service.

For the sake of lucidity, the following descriptions refer to the resulting aggregate of all commodities/services mapped into company $i$'s industry rather than explicitly mentioning the sum of the respective underlying commodities/services.

Apart from this, FIG. 3 is similar to FIG. 2 and what has been described in regard to FIG. 2 is likewise applicable to FIG. 3.

In case the reported region does not include the reporting company's home country, the revenues of company $i$ (located in country $H$ and belonging to industry $J$) that are generated in country c of region $R$ may be calculated as:

$$S_{i,c_R} = \frac{EXP_{H,J,c_R}}{\sum_{c_R}^{C} EXP_{H,J,c_R}} S_{i,R}$$

where $S_{i,R}$ indicates the revenues of company $i$ generated in region $R$, and $EXP_{H,J,c_R}$ indicates the exports from company $i$'s home country's $(H)$ industry $J$ to country $c$ of region $R$.

In case the reported region does include the reporting company's home country, the portion of revenues that is assumed to be generated in the company's home country $H$ may first be extracted from the reported revenues. In a subsequent step, the process of FIG.2 may be applied to break down the remaining revenues to a per country level.

To separate the home country portion of total revenues, the portion of revenues generated in company $i$'s home country $H$ (with company $i$ belonging to industry $J$) may be calculated as follows:

$$S_{i,H} = \left( 1 - \frac{\sum_{c_R}^{C} EXP_{H,J,c_R}}{\sum_{c_R}^{C} EXP_{H,J,c_R} + GDP_{H,J} - EXP_{H,J,V} + IMP_{H,J,V}} \right) S_{i,R}$$

where $GDP_{H,J}$ indicates the GDP subpart of industry $J$ in home country $H$. $EXP_{H,J,c_R}$ indicates the exports from company $i$'s home country's $(H)$ industry $J$ to country $c$ of region $R$. $EXP_{H,J,V}$ and $IMP_{H,J,V}$ indicate the exports and imports of country $c$'s industry $J$ from the rest of the world $V$.

In an alternative embodiment, the portion of revenues generated locally can also be determined as the average share of local revenues determined across all those companies $N$ from country $H$ in the data sample that directly report their local revenues. Hereby, the average share of revenues generated locally over all companies $\tilde{\imath} = 1, ..., N_{H,J}$ out of country $H$ that belong to industry $J$ ($N_{H,J}$) that directly report their local revenues.

$$S_{i,H} = \left( 1/N_{H,J} \sum_{\tilde{\imath}}^{N_{H,J}} \frac{S_{\tilde{\imath},J,H}}{TR_{\tilde{\imath},J,H}} \right) TR_{i,H}$$

where $TR_{i,H}$ indicates the total revenues generated by company $i$ located in country $H$ and belonging to industry $J$.

The portion of revenues generated in the reported home region $K$ outside of the reporting company's home country ($S_{i,K}$) may then be calculated as:

$$S_{i,K} = S_{i,R} - S_{i,H}$$

and the remaining country revenues may be determined as follows:

$$S_{i,c_R} = \frac{EXP_{H,J,c_R}}{\sum_{c_R}^C EXP_{H,J,c_R}} S_{i,K}.$$

In case companies only report a single revenue number for the entire world, without any further breakdown to the country or regional level, a similar methodology may be applied.

In a first step, the home portion of the total revenue figure is determined by separating the home country portion:

$$S_{i,H} = \left(1 - \frac{EXP_{H,J,V}}{GDP_{H,J} + IMP_{H,J,V}}\right) S_{i,R}.$$

Again, in an alternative embodiment, the portion of revenues generated in company $i$'s home country $H$ (with company $i$ belonging to industry $J$) may be calculated as the average share of revenues generated locally over all companies $\tilde{i} = 1, ..., N_{H,J}$ out of country $H$ that belong to industry $j$ ($N_{H,J}$) that directly report their local revenues is determined as:

$$S_{i,H} = \left(1/N_{H,J} \sum_{\tilde{i}}^{N_{H,J}} \frac{S_{\tilde{i},J,H}}{TR_{\tilde{i},J,H}}\right) TR_{i,H}.$$

The portion of revenues generated in the "rest of the world" V may then be given with:

$$S_{i,V} = S_{i,W} - S_{i,H}.$$

Finally, the remaining country revenues may be determined as follows:

$$S_{i,c_V} = \frac{EXP_{H,J,c_V}}{\sum_{c_V}^C EXP_{H,J,c_V}} S_{i,V}$$

where $EXP_{H,J,c_V}$ indicates the exports from company $i$'s home country's $(H)$ industry $J$ to country $c$ in the rest of the world $V$.

In the context of the previously outlined derivations of the home country revenue portion, the respective exports have been set into relation to GDPs and Imports. In an alternative embodiment, the relevant factors may also be derived without the explicit considerations of imports.

Referring back to FIG. 1, the computer system 100, being a proxy or any other system, may output the calculated country-specific revenue data 160, $i.e.$, $S_{i,c_R}$, $S_{i,H}$, and/or $S_{i,c_V}$, to any subsequent stage. This data indicates an estimate of the company's revenue in the respective country even though this company did not report this revenue. The calculated country-specific revenue data 160 may be output in steps 260 or 360 of FIGS. 2 or 3.

In an embodiment, the computer system 100 may output the calculated country-specific revenue data 160 in relative terms, for instance as percentage values, thereby indicating the respective share of total revenues. For example, the calculated country-specific revenue data 160 may be output as $\frac{S_{i,c_R}}{TR_i}$, $\frac{S_{i,H}}{TR_i}$, and/or $\frac{S_{i,c_V}}{TR_i}$. Where a company reports its revenues $S_{i,c}$ directly on country level, the calculated country-specific revenue data 160 may be output as $\frac{S_{i,c}}{TR_i}$.

In an embodiment, such subsequent stages include one or more computer systems that use this data and company-independent risk scores to estimate risk figures of the company pertaining to the respective country. Alternatively, as depicted in FIG. 1, this may be done as part of computer system 100. In such an embodiment, the computer system 100 may receive company-independent country-specific risk scores 150 from external or internal sources, and output country-specific risk data 170 to arbitrary subsequent stages.

To explicitly consider the country risk (*e.g.* political risk, economic risk, financial risk) to which company *i* is exposed via the revenues it generates in a particular country, company-specific country risk figures may be determined as a weighted average of (a) a country risk measures and (b) revenues generated in a given country.

The country risk faced by company *i* ($CR_i$) from its sales exposure to the home and foreign markets may then be calculated as follows:

$$CR_i = \frac{\sum_{c=1}^{C} S_{ic}\, RS_c}{TR_i}$$

where $S_{i,c}$ indicates the revenues of company *i* generated in country *c* with $c = 1,...,C$, where $RS_c$ indicates a country risk score of country *c* (*e.g.* political, financial, or economic risks), and where $TR_i$ indicates total revenues generated by company *i*.

The revenues on country level $S_{i,c}$ may be revenues estimated based on any of the above approaches described in context to FIGs. 2 and 3. In other embodiments, these revenues may be directly taken from the respective company's reported data 130.

Further, the country-specific revenue data 160 and/or the country-specific risk data 170 may be used in subsequent stages or within the computer system 100 itself to calculate an economic index. Unlike conventional indices such as STOXX Global 1800 EM Exposed or STOXX Europe 600 EM Exposed, the index according to the embodiments is generated on a country level based on country-specific (and optionally also industry-specific) export data. For instance, the computer system 100 may generate index data 170 to track changes in the company's economic performance and/or the company's home country's economic performance based on the calculated country-specific revenue data 160 and/or the calculated country-specific risk data 170 and/or based on revenues already directly reported by the company on country level. More generally, this index may indicate the revenue performance or risk figures to companies located in a given country, or companies of a certain home country and generating revenues in certain other countries. As an example, the embodiments allow for generating an index for companies from France which generate revenues in Vietnam. This is extremely helpful information which is presently not available for all companies and countries and which is made possible just by means of the computer-based data processing technique as described above with reference to the embodiments.

While the invention has been described with respect to the physical embodiments constructed in accordance herewith, it will be apparent to those skilled in the art that various modification, variation and improvements of the present invention may be made in the light of the above teachings and within the purview of the appended claims without departing from the spirit and intended scope of the invention. Accordingly, it is to be understood that the invention is not limited by the specific illustrative embodiments, but only by the scope of the appended claims.

**Claims**

1. A computer system comprising one or more processors configured to:

   receive region-specific revenue data indicating a company's revenue pertaining to a specific geographic region;
   determine the company's home country;
   receive country-specific export data indicating a macroeconomic export volume or export value from the company's home country to a given country within said geographic region; and
   calculate country-specific revenue data estimating said company's revenue pertaining to said given country within said geographic region based on said region-specific revenue data and said country-specific export data.

2. The computer system of claim 1, wherein said one or more processors are further configured to:

   determine whether the company's home country is within said geographic region,
   wherein calculating said country-specific revenue data comprises applying a first algorithm if the company's home country is within said geographic region, and a second algorithm if the company's home country is not within said geographic region, said first algorithm being different from said second algorithm.

3. The computer system of claim 2, wherein said one or more processors are further configured to, when applying said first algorithm:

calculate home country revenue data estimating said company's revenue pertaining to its home country;

subtract said estimated company's revenue pertaining to its home country from said company's revenue pertaining to said specific geographic region as indicated by said region-specific revenue data, thereby resulting in an estimated company's revenue pertaining to said specific geographic region excluding said company's home country; and

apply said second algorithm using said estimated company's revenue pertaining to said specific geographic region excluding said company's home country.

4. The computer system of claim 3, wherein said one or more processors are further configured to calculate said home country revenue data based on one or more of:

a gross domestic product of said company's home country;

an export volume or export value from the company's home country to the rest of the world;

an import volume or import value from the rest of the world to said company's home country; and

other companies' revenue shares pertaining to said company's home country.

5. The computer system of one of claims 2 to 4, wherein said one or more processors are further configured to determine whether said geographic region is the entire world, and wherein determining that said geographic region is the entire world comprises inferring that the company's home country is within said geographic region.

6. The computer system of one of claims 1 to 5, wherein said one or more processors are further configured to:

determine an industry to which said company belongs,

wherein said country-specific export data is country-specific and industry-specific export data indicating a macroeconomic export volume or export value within said determined industry from the company's home country to said given country, and

wherein said country-specific revenue data is calculated based on said region-specific revenue data and said country-specific and industry-specific export data.

7. The computer system of claim 6, wherein said one or more processors are further configured to:

determine whether the company's home country is within said geographic region,

wherein calculating said country-specific revenue data comprises applying a first algorithm if the company's home country is within said geographic region, and a second algorithm if the company's home country is not within said geographic region, said first algorithm being different from said second algorithm.

8. The computer system of claim 7, wherein said one or more processors are further configured to, when applying said first algorithm:

calculate industry-dependent home country revenue data estimating said company's revenue pertaining to its industry and home country;

subtract said estimated company's revenue pertaining to its industry and home country from said company's revenue pertaining to said specific geographic region as indicated by said region-specific revenue data, thereby resulting in an estimated company's revenue pertaining to said specific geographic region excluding said company's home country; and

apply said second algorithm using said estimated company's revenue pertaining to said specific geographic region excluding said company's home country.

9. The computer system of claim 8, wherein said one or more processors are further configured to calculate said industry-dependent home country revenue data based on one or more of:

other companies' revenue shares pertaining to said company's home country and industry;

a gross domestic product of said company's industry within said home country;

an export volume or export value from the company's industry within said home country to the rest of the world; and

an import volume or import value from the rest of the world to said company's industry within said home country.

10. The computer system of one of claims 7 to 9, wherein said one or more processors are further configured to determine whether said geographic region is the entire world, and wherein determining that said geographic region is the entire world comprises inferring that the company's home country is within said geographic region.

11. The computer system of one of claims 1 to 10, wherein said one or more processors are further configured to perform one or more of:

> calculate an economic index to track changes in one or more of said company's economic performance and said company's home country's economic performance based on said calculated country-specific revenue data and/or revenues already directly reported by said company on country level; and
> calculate company-specific country risk data estimating said company's risk pertaining to said given country within said geographic region based on the calculated country-specific revenue data and based on a company-independent risk score pertaining to said country.

12. The computer system of claim 11, wherein said one or more processors are configured to perform one or more of:

> calculate said company-specific country risk data by determining a weighted average of the calculated country-specific revenue data and the company-independent risk score; and
> calculate an economic index to track changes in one or more of said company's economic performance and said company's home country's economic performance based on said calculated country-specific revenue data and said calculated company-specific country risk data, and/or based on revenues already directly reported by said company on country level.

13. The computer system of one of claims 1 to 12, wherein said one or more processors are further configured to perform the acts of receiving said region-specific revenue data, determining the company's home country, receiving said country-specific export data, and calculating said country-specific revenue data as part of a proxy that provides revenue breakdowns on a country level even where such revenues are not available.

14. A computer-implemented method comprising:

> receiving region-specific revenue data indicating a company's revenue pertaining to a specific geographic region;
> determining the company's home country;
> receiving country-specific export data indicating a macroeconomic export volume or export value from the company's home country to a given country within said geographic region; and
> calculating country-specific revenue data estimating said company's revenue pertaining to said given country within said geographic region based on said region-specific revenue data and said country-specific export data.

15. A tangible computer-readable storage medium storing instructions that, when executed by one or more processors, cause said one or more processors to:

> receive region-specific revenue data indicating a company's revenue pertaining to a specific geographic region;
> determine the company's home country;
> receive country-specific export data indicating a macroeconomic export volume or export value from the company's home country to a given country within said geographic region; and
> calculate country-specific revenue data estimating said company's revenue pertaining to said given country within said geographic region based on said region-specific revenue data and said country-specific export data.

Proxy System ~100

130~ **Company´s reported data**

110
Processor(s)

120
Memory

Country-specific revenue data ~160

Country-specific risk data ~170

Index data ~180

140~ Export data

Risk scores ~150

## FIG. 1

Start

Receiving region-specific revenue data ~200

Determining home country ~210

Receiving country-specific export data ~220

230

Home country within region ?

Yes          No

Calculating home country revenue data ~240

Subtracting home country revenue from regional revenue ~250

Calculating country-specific revenue data ~260

Return

FIG. 2

Start

Receiving region-specific revenue data ~300

Determining home country and industry ~310

Receiving country-specific and industry-specific export data ~320

330
Home country within region ?

Yes

Calculating industry-dependent home country revenue data ~340

Subtracting industry-dependent home country revenue from regional revenue ~350

No

Calculating country-specific revenue data ~360

Return

FIG. 3

13

**EUROPEAN SEARCH REPORT**

Application Number

EP 16 15 0834

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| | The claimed subject-matter, with due regard to the description and drawings in accordance with Art. 92 EPC, relates to processes comprised in the list of subject-matter and activities excluded from patentability under Art. 52(2) and (3) EPC. The information technology employed as an enabler for carrying out said processes is so well-known that its existence at the relevant date cannot reasonably be disputed. The claimed technical feature(s), namely the computer system comprising one or more processors, is therefore considered to be part of the notorious knowledge, for which no documentary evidence is deemed necessary. (see Guidelines for Examination in the European Patent Office, B-VIII, 2.2.1) ----- | | INV. G06Q40/00 G06Q40/08 |
| | | | TECHNICAL FIELDS SEARCHED (IPC) |
| | | | G06Q |

The present search report has been drawn up for all claims

| Place of search | Date of completion of the search | Examiner |
|---|---|---|
| The Hague | 1 July 2016 | Mascia, Franco |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

................................................................

& : member of the same patent family, corresponding document

EPO FORM 1503 03.82 (P04C01)